# EUROPEAN PATENT APPLICATION

(11) **EP 2 174 863 A2**
(43) Date of publication of application: **14.04.2010**
(21) Application number: 09153154.1
(22) Date of filing: 19.02.2009
(51) Int. Cl.: B62K 23/06

(54) **Bicycle component body assembly**

(30) Priority: 08.10.2008 US 247530
(71) Applicant: Shimano, Inc., Osaka 590-8577 (JP)
(72) Inventor: Miki, Yoshimitsu, Sakai City Osaka Osaka 590-8577 (JP); Terada, Takefumi, Sakai City Osaka Osaka 590-8577 (JP)
(74) Representative: Hofmann, Harald

(57) **Abstract**

A bicycle component body assembly comprises a body member (42), a first interchangeable sub-part (44), a second interchangeable sub-part (44'), and a sub-part retaining structure (48,64a). The body member (42) includes a sub-part mounting area (64). The first interchangeable sub-part (44) is interchangeably coupled to the sub-part mounting area (64) of the body member (42) to form a first body configuration. The second interchangeable sub-part (44') is interchangeably coupled to the sub-part mounting area (64) of the body member (42) to form a second body configuration that is different from the first body configuration. The sub-part retaining structure (48,64a) alternately retains, one at a time, the first and second interchangeable sub-parts (44,44') to the sub-part mounting area (64) of the body member (42) to selectively attain the first body configuration when the first interchangeable sub-part (44) is coupled to the sub-part mounting area (64) of the body member (42) and attain the second body configuration when the second interchangeable sub-part (44') is coupled to the sub-part mounting area (64) of the body member (42).

## Description

### Field of the Invention

This invention generally relates to a bicycle control device. More specifically, the present invention relates to a bicycle component body assembly for a bicycle control device that allows the rider to selectively create a plurality of body configurations.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. In particular, bicycle control devices for braking and/or shifting have been extensively redesigned in recent years.

Typically, bicycle control devices are hand operated devices that are used to operate a bicycle component (e.g., derailleurs and brakes). These bicycle control devices can either mechanically operate the bicycle component via a cable or hydraulic fluid or can electrically operate the bicycle component via electrical signals to an actuator. In the case of a road bicycle, the bicycle control device (e.g., the brake operating device or the shift/brake operating device) is typically mounted to the handlebar. The rider often holds or leans on this type of bicycle control device (e.g., the brake operating device or the shift/brake operating device) during riding. Thus, typically, the bicycle control device (e.g., the brake operating device or the shift/brake operating device) has an elastomeric cover where the rider grips or leans on the bicycle control device. However, since riders' hands vary in size, the bicycle control device may not be comfortable for all sizes of riders' hands.

In view of the above, it will be apparent to those skilled in the art from this disclosure that there exists a need for an improved bicycle component body assembly. This invention addresses this need in the art as well as other needs, which will become apparent to those skilled in the art from this disclosure.

### SUMMARY OF THE INVENTION

One object of the present invention is to provide a bicycle component body assembly that allows the rider to easily reconfigure a body configuration of a body for a bicycle control device.

The foregoing objects can basically be attained by providing a bicycle component body assembly that basically comprises a body member, a first interchangeable sub-part, a second interchangeable sub-part, and a sub-part retaining structure. The body member includes a sub-part mounting area. The first interchangeable sub-part is interchangeably coupled to the sub-part mounting area of the body member to form a first body configuration. The second interchangeable sub-part is interchangeably coupled to the sub-part mounting area of the body member to form a second body configuration that is different from the first body configuration. The sub-part retaining structure alternately retains, one at a time, the first and second interchangeable sub-parts to the sub-part mounting area of the body member to selectively attain the first body configuration when the first interchangeable sub-part is coupled to the sub-part mounting area of the body member and attain the second body configuration when the second interchangeable sub-part is coupled to the sub-part mounting area of the body member.

These and other objects, features, aspects and advantages of the present invention will become apparent to those skilled in the art from the following detailed descriptions, which, taken in conjunction with the annexed drawings, discloses a preferred embodiment.

### BRIEF DESCRIPTION OF THE DRAWINGS

Referring now to the attached drawings which form a part of this original disclosure:

Figure 1 is a side elevational view of bicycle equipped with a pair of bicycle control (shift/brake) devices (only one shown) coupled to a drop type handlebar in accordance with a preferred embodiment;

Figure 2 is an exploded, side perspective view of one of the bicycle control (shift/brake) devices illustrated in Figure 1 with a first pair of interchangeable sub-parts to shown one of four possible body configurations;

Figure 3 is a side elevational view of the body member with the first pair of interchangeable sub-parts attached to the body member to shown one of four possible body configurations;

Figure 4 is a top plan view of the body member with the first pair of interchangeable sub-parts attached to the body member to shown one of four possible body configurations;

Figure 5 is a top plan view of the body member without the interchangeable sub-parts being attached to the body member so as to reveal the sub-part mounting areas;

Figure 6 is an exploded, side perspective view of the bicycle control (brake/shift) device, with a second pair of interchangeable sub-parts to shown one of four possible body configurations;

Figure 7 is a side elevational view of the body member with the second pair of interchangeable sub-parts attached to the body member to shown one of four possible body configurations; and

Figure 8 is a top plan view of the body member with the second pair of interchangeable sub-parts attached to the body member to shown one of four possible body configurations.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

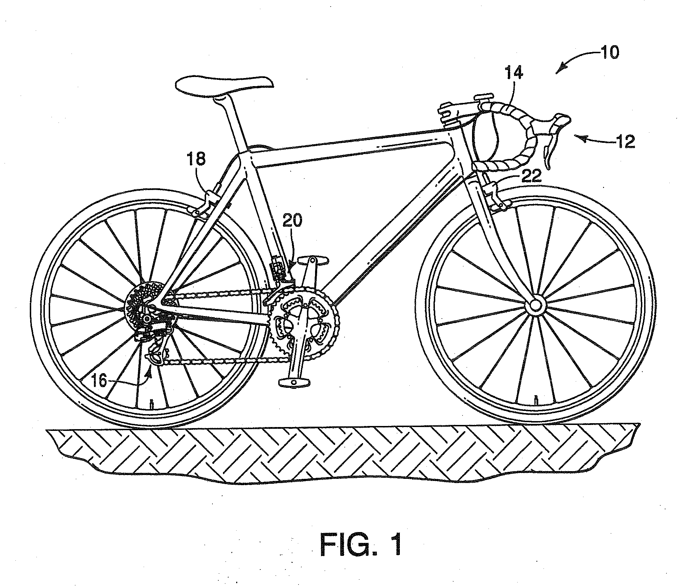

Referring initially to Figure 1, a bicycle 10 is illustrated with a pair of bicycle control devices 12 (only one shown in Figure 1) mounted in a drop type bicycle handlebar 14 in accordance with one preferred embodiment. The bicycle control devices 12 can also be considered to be bicycle component operating devices. Basically, each of the bicycle control devices 12 is configured to allow the rider to easily reconfigure a body configuration of a lever bracket or base member for a bicycle control device as explained below.

One of the control devices 12 is operatively coupled to a rear derailleur 16 and a rear braking device 18, while the other of the control devices 12 is operatively coupled to a front derailleur 20 and a front braking device 22. The right and left hand side control devices 12 are essentially identical in construction and operation, except that they are mirror images. Thus, only one of the control devices 12 will be discussed and illustrated herein. While in the illustrated embodiment, the control devices 12 are connected to a pair of cables for operating their respective derailleur and their respective braking device, the control devices 12 can be other types of control devices such as solely a brake operating device, or solely a shifter. Also, the control devices 12 can be electronic control devices, as needed and/or desired.

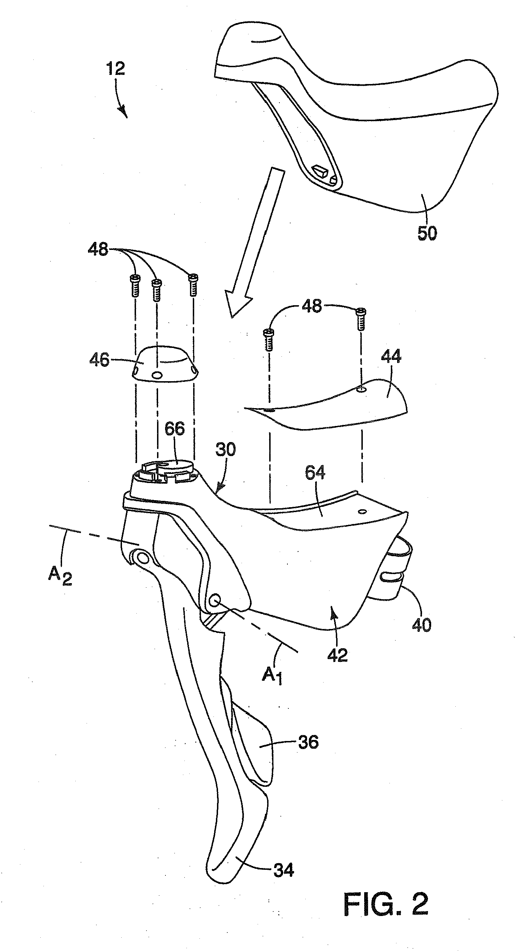

As best seen in Figure 2, each of the control devices 12 basically includes a lever bracket or base member 30, a dual brake/shift lever 34 and a shift release lever 36. Since dual brake/shift control devices are well known in the bicycle field, the precise construction and operation of the control device 12 will not be discussed and or illustrated in detail herein. Rather, the following discussion will focus on the base member 30, which can be implemented with a wide variety of control devices.

As best seen in Figure 2, the dual brake/shift lever 34 and the shift release lever 36 are both movably coupled with respect to the base member 30 about a pivot axis A₁. Also, the dual brake/shift lever 34 and the shift release lever 36 are both further pivotally mounted on the base member 30 about a pivot axis A₂ that is perpendicular to the pivot axis A₁. Thus, the dual brake/shift lever 34 and the shift release lever 36 each constitute an operating member that is movably (pivotally) coupled with respect to the base member 30. Preferably, the dual brake/shift lever 34 is a cable operated brake lever that is pivotally mounted to the base member 30 for performing a bicycle braking operation. In other words, the dual brake/shift lever 34 is attached to a brake cable to operate one of the braking devices. Also the dual brake/shift lever 34 and the shift release lever 36 are both operatively coupled to a shifting unit disposed in the base member 30. The shifting unit (not shown) can be either a cable operated shifting unit or an electronic shifting unit.

Basically, the base member 30 includes a tube or band clamp 40, a body member 42, one of a pair of interchangeable grip sub-parts 44 and 44', one of a pair interchangeable projecting sub-parts 46 and 46' and a plurality of threaded fasteners 48. Also the base member 30 is covered by an elastomeric cover 50.

In the illustrated embodiment, the body member 42 is constructed of a plastic member as a piece, unitary plastic member or as a plurality of plastic members that are fixed together as a unit. The base member 30 is mounted to the bicycle handlebar 14 by the tube clamp 40 that is attached to the rear end of the base member 30. The tube clamp 40 is a conventional metal clamp and will not be discussed and/or illustrated in detail herein.

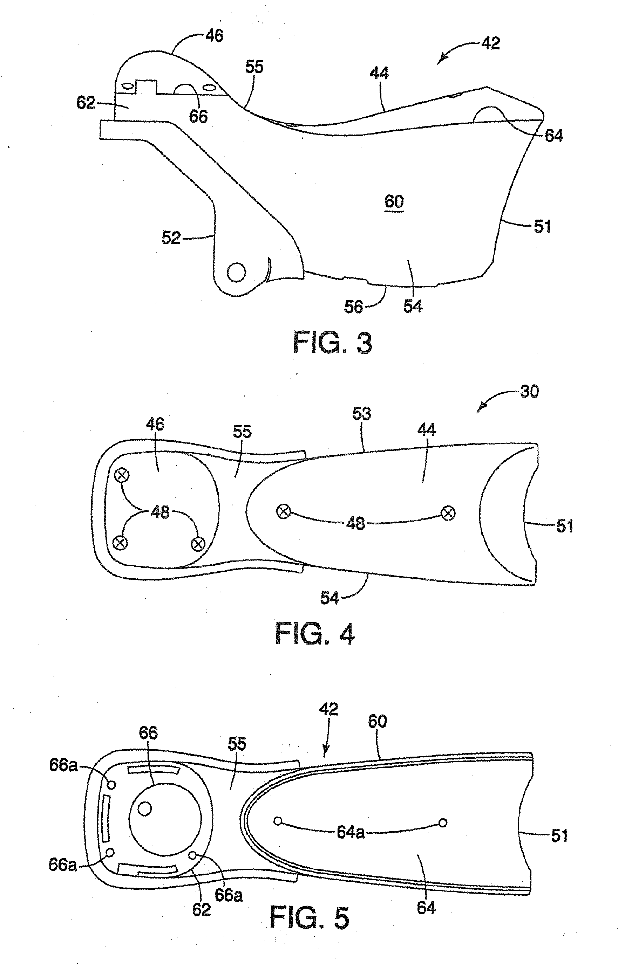

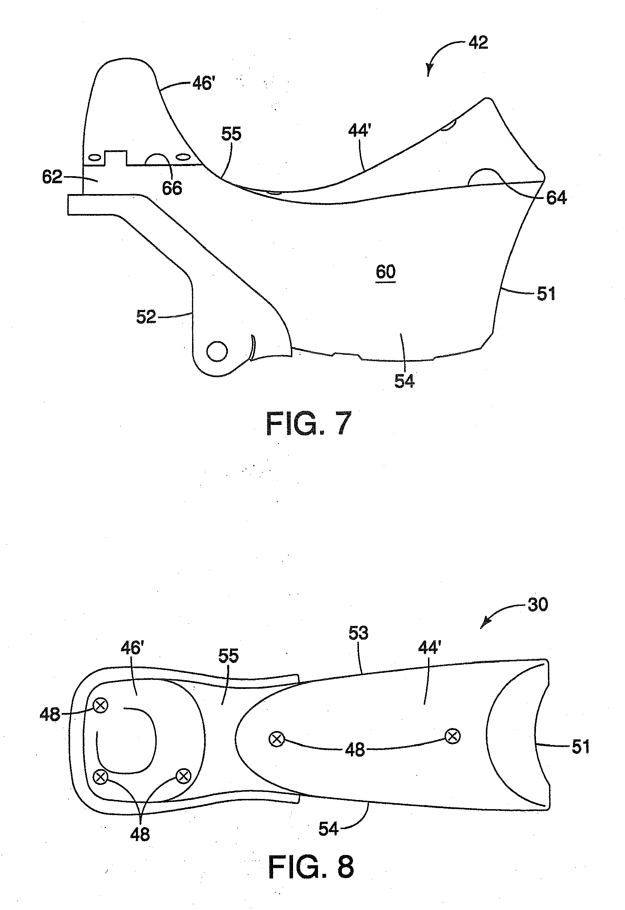

One of the interchangeable grip sub-parts 44 and 44' and one of the interchangeable projecting sub-parts 46 and 46' are selectively attached to the body member 42 to create one of four possible body configurations (e.g., two body configurations are illustrated in Figures 3 and 7). Due to the resiliency and elastomeric properties of the elastomeric cover 50, the elastomeric cover 50 can be used with each of the four possible body configurations. Alternatively, one or more elastomeric covers can be provided for accommodating the different body configurations.

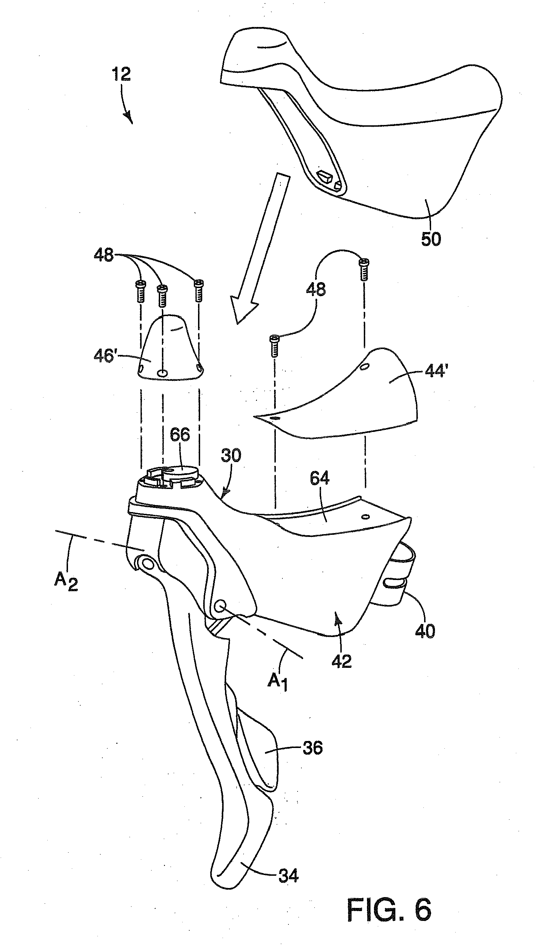

While only four interchangeable sub-parts are illustrated in Figures 2 to 8, it will be apparent from this disclosure that additional interchangeable sub-parts can be used with the body member 42. For example, three interchangeable grip sub-parts and three interchangeable projecting sub-parts can be provided with the body member 42 to provide nine possible body configurations.

In the illustrated embodiment, the body member 42 together with the sub-parts 44, 44', 46 and 46', the fasteners 48 and the elastomeric cover 50 constitute a bicycle component body assembly or kit. The body member 42 of the bicycle component body assembly or kit can be either separate from the remaining parts of the control device 12 or can be a completed control device. Thus, the bicycle component body assembly or kit can be produced and or sold for converting an existing control device to a reconfigurable control device having a plurality of interchangeable sub-parts. Alternatively, the bicycle component body assembly or kit can be the control device 12 packaged together with the sub-parts 44, 44', 46 and 46' so that the rider can change the body configuration of the control device 12.

As best seen in Figures 3 to 5, the base member 30 has a generally rectangular transverse cross section with rounded corner such that basically includes a handlebar attachment end 51, a lever attachment end 52, a pair of side walls 53 and 54, a top surface 55 extending between the side walls and a bottom surface 56 extending between the side walls 53 and 54. The body member 42 is a partially hollow body that houses the shifting unit (not shown). The body member 42 can basically be divided into a rider grip portion 60 and a distal end portion 62. The rider grip portion 60 is disposed between the handlebar attachment end 51 and the lever attachment end 52. The distal end portion is disposed adjacent the lever attachment end 52 and protrudes upwardly with respect to the rider grip portion 60.

Preferably, the sub-parts 44, 44', 46 and 46' are each formed as a one-piece, unitary plastic member that are removable and reinstallable to the body member 42 to form different body configurations. In the illustrated embodiment, the threaded fasteners 48 are used for interchanging the sub-parts 44, 44', 46 and 46' to and from the body member 42. However, other types of reusable connections can be used. For example, a snap-fit arrangement can be utilized between the sub-parts 44, 44', 46 and 46' and the body member 42. In the illustrated embodiment, the body member 42 is formed with a first sub-part mounting area 64 for attaching the interchangeable grip sub-parts 44 and 44', and a second or additional sub-part mounting area 66 for attaching the interchangeable projecting sub-parts 46 and 46'. The first sub-part mounting area 64 is formed along the top surface 55 extending along the rider grip portion 60 of the body member 42, while the second or additional sub-part mounting area 66 is formed along the top surface 55 extending along the distal end portion 62 of the body member 42, when mounted to the bicycle 10 in an in-use orientation (e.g., as seen in Figure 1). The first sub-part mounting area 64 is provided with a pair of bores 64a for threadedly receiving a pair of the threaded fasteners 48, while the second sub-part mounting area 66 provided with three bores 66a for threadedly receiving a pair of the threaded fasteners 48. In this illustrated embodiment, the threaded fasteners 48 and the bores 64a and 66a constitutes a sub-part retaining structure that alternately retains, one at a time, one of the interchangeable grip sub-parts 44 and 44',and one of the interchangeable projecting sub-parts 46 and 46' to the sub-part mounting areas 64 and 66 of the body member 42, respectively.

As best seen in Figures 2 to 4 and 6 to 8, the first sub-part mounting area 64 is configured and arranged for selectively receiving the interchangeable grip sub-parts 44 and 44', one at a time. Thus, the interchangeable grip sub-parts 44 and 44' are selectively attached to the first sub-part mounting area 64 of the body member 42 to change an effective overall height of the body member 42. The interchangeable grip sub-parts 44 and 44' are interchangeably coupled to the sub-part mounting area 64 of the body member 42 to form two different body configurations. In other words, the interchangeable grip sub-parts 44 and 44' are dimensioned relative to each other such that the interchangeable grip sub-part 44 forms a first height of the rider grip portion 60 when coupled to the body member 42, and such that the interchangeable grip sub-part 44' forms a second height of the rider grip portion 60 when coupled to the body member 42, with the first and second heights being different. In the illustrated embodiment, the interchangeable grip sub-part 44 produces a smaller rider grip portion as compared to when the interchangeable grip sub-part 44' is used.

Still referring to Figures 2 to 4 and 6 to 8, the second sub-part mounting area 66 is configured and arranged for selectively receiving the interchangeable projecting sub-parts 46 and 46', one at a time. Thus, the interchangeable projecting sub-parts 46 and 46' are selectively attached to the second sub-part mounting area 66 of the body member 42 to change an effective overall height of the body member 42. The interchangeable projecting sub-parts 46 and 46' are interchangeably coupled to the sub-part mounting area 66 of the body member 42 to form two different body configurations. In other words, the interchangeable projecting sub-parts 46 and 46' are dimensioned relative to each other such that the interchangeable projecting sub-part 46 forms a first projection with a first height of the distal end portion 62 when coupled to the body member 42, and such that the interchangeable projecting sub-part 46' forms a second projection with a second height of the distal end portion 62 when coupled to the body member 42, with the first and second heights being different. In the illustrated embodiment, the interchangeable projecting sub-part 46 produces a smaller projection of on the distal end portion 62 as compared to when the interchangeable projecting sub-part 46' is used.

The elastomeric cover 50 overlies a majority of the body member 42, the one of the interchangeable grip sub-parts 44 and 44', which is attached to the body member, and one of the interchangeable projecting sub-parts 46 and 46', which is attached to the body member 42. The elastomeric cover 50 is formed of a one-piece, unitary member. Of course, the elastomeric cover 50 could be contracted of several pieces if need and/or desired.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the bicycle control device of the present invention. Accordingly, these terms, as utilized to describe the present invention should be interpreted relative to a bicycle equipped with the bicycle control device of the present invention as used in the normal riding position. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle component body assembly comprising:
a body member including a sub-part mounting area;
a first interchangeable sub-part interchangeably coupled to the sub-part mounting area of the body member to form a first body configuration;
a second interchangeable sub-part interchangeably coupled to the sub-part mounting area of the body member to form a second body configuration that is different from the first body configuration; and
a sub-part retaining structure alternately retaining, one at a time, the first and second interchangeable sub-parts to the sub-part mounting area of the body member to selectively attain the first body configuration when the first interchangeable sub-part is coupled to the sub-part mounting area of the body member and attain the second body configuration when the second interchangeable sub-part is coupled to the sub-part mounting area of the body member.

2. The bicycle component body assembly according to claim 1, wherein
the body member includes a rider grip portion having the sub-part mounting area formed along a top surface of the body member, when mounted to a bicycle in an in-use orientation; and
the first and second interchangeable sub-parts are dimensioned relative to each other such that the first interchangeable sub-part forms a first height of the rider grip portion when coupled to the body member, and such that the second interchangeable sub-part forms a second height of the rider grip portion when coupled to the body member, with the first and second heights being different.

3. The bicycle component body assembly according to claim 1, wherein
the body member includes a handlebar attachment end, a lever attachment end, a rider grip portion disposed between the handlebar attachment end and the lever attachment end and a distal end portion adjacent the lever attachment end; and
the sub-part mounting area is formed along a top surface of the distal end portion of the body member, with first and second interchangeable sub-parts being dimensioned relative to each other such that the first interchangeable sub-part forms a first projection with a first height when coupled to the body member, and such that the second interchangeable sub-part forms a second projection with a second height when coupled to the body member and, with the first and second heights being different.

4. The bicycle component body assembly according to any one of claims 1 to 3, further comprising
an elastomeric cover that overlies a majority of the body member and one of the first and second interchangeable sub-parts, which is attached to the body member.

5. The bicycle component body assembly according to any one of claims 1 to 4, further comprising
a third interchangeable sub-part interchangeably coupled to an additional sub-part mounting area of the body member to form a third body configuration; and
a fourth interchangeable sub-part interchangeably coupled to the additional sub-part mounting area of the body member to form a fourth body configuration that is different from the first to third body configurations.

6. The bicycle component body assembly according to any one of claims 1 to 5, wherein
the body member includes a handlebar attachment end, a lever attachment end, a pair of side walls, a top surface extending between the side walls and a bottom surface extending between the side walls, with the sub-part mounting area and the additional sub-part mounting area being formed along a top surface of the body member, when mounted to a bicycle in an in-use orientation.

7. The bicycle component body assembly according to claim 5 or 6, when dependent on claim 5 wherein
the body member includes a rider grip portion and a distal end portion, with the sub-part mounting area being formed along a top surface of the rider grip portion of the body member and the additional sub-part mounting area being formed along a top surface of the distal end portion of the body member, when mounted to a bicycle in an in-use orientation;
the first and second interchangeable sub-parts are dimensioned relative to each other such that the first interchangeable sub-part forms a first height of the rider grip portion when coupled to the body member, and such that the second interchangeable sub-part forms a second height of the rider grip portion when coupled to the body member, with the first and second heights of the rider grip portion being different; and
the third and fourth interchangeable sub-parts are dimensioned relative to each other such that the third interchangeable sub-part forms a first projection with a first height of the distal end portion when coupled to the body member, and such that the second interchangeable sub-part forms a second projection with a second height of the distal end portion when coupled to the body member, with the first and second heights of the distal end portion being different.

8. The bicycle component body assembly according to claim 5 or any one of claims 6 to 7, when dependent on claim 5, further comprising
an elastomeric cover that overlies a majority of the body member, one of the first and second interchangeable sub-parts, which is attached to the body member, and one of the third and fourth interchangeable sub-parts, which is attached to the body member.

9. The bicycle component body assembly according to any one of claims 1 to 8, further comprising
an operating member movably coupled with respect to the body member, in particular the operating member including a shift lever and/or
a brake lever pivotally with respect to coupled to the body member.

10. The bicycle component body assembly according to any one of claims 1 to 9, wherein the sub-part retaining structure includes at least one threaded fastener and at least one bore formed in the sub-part mounting area of the body member.
